# EUROPEAN PATENT APPLICATION

(11) **EP 2 731 362 A1**
(43) Date of publication of application: **14.05.2014**
(21) Application number: 12306375.2
(22) Date of filing: 08.11.2012
(51) Int. Cl.: H04W 4/02, H04M 1/73

(54) **Configuration of electronic device**

(71) Applicant: Alcatel Lucent, 75007 Paris (FR)
(72) Inventor: Pianese, Fabio, 1000 Brussels (BE); An, Xueli, 80798 Munich (DE); Kawsar, Fahim, 2018 Antwerpen (BE)
(74) Representative: D'Halleweyn, Nele Veerle Trees Gertrudis

(57) **Abstract**

Method for configuring an electronic device, the method comprising the steps of:
- Accessing at least two distinct datasets each comprising past user activity data;
- Extracting time and location information from each of the datasets;
- Executing an algorithm to obtain, from the extracted time and location information, time-location correlations to recognize a location pattern over time;
- Converting said location pattern over time to the present and future to obtain a time-location expectation; and
- Configuring the electronic device based on said expectation.

## Description

### Technical Field

The present invention provides a method for interpreting and using big data.

### Background

The field of machine learning and data analytics is concerned with extracting relevant information from large amounts of data. The extracted information can then be leveraged to solve practical problems or to positively affect concrete situations, such as by optimizing the operation of an electronic device. The challenges of data analytics have to do with the process of data collection, and the hurdle of processing large amounts of data to extract the relevant information. It is often the case that the big data comprises multiple individual data sets about a single interesting phenomenon or individual. These data sets are distinct, produced by different systems, and more often than not maintained using different standards.

In the prior art, the prevalent approach is to collect data actively for the purpose of determining a user's location and/or activity: users carry one or more electronic devices that generate a continuous stream of readings about different aspects of the user's behavior. However, actively collecting data creates an additional burden: sometimes more devices must be carried, more software needs to be run on an existing device, or more data needs to be generated at the device about the user's activity. In particular, extra memory is used, extra network bandwidth is used, and extra energy is used (thereby compromising available battery time).

It is an object of the present invention to optimize operation of an electronic device based on big data by adopting a passive approach.

### Summary

To this end, the invention provides a method for configuring an electronic device, the method comprising the steps of:
- accessing at least two distinct data sets each comprising past user activity data;
- extracting time and location information from each of the data sets;
- executing an algorithm to obtain, from the extracted time and location information, time-location correlations to recognize a location pattern over time;
- converting said location pattern over time to the present and future to obtain a time-location expectation; and
- configuring the electronic device based on said expectation.

According to the present invention, time and location information is gathered from multiple data sets. Because multiple data sets are used to extract information, the invention cannot be interpreted as covering creation of a specific data set for the purpose of the configuration of the electronic device. Therefore, the use of two distinct data sets each comprising past user activity data indicates that 'big data' is used to extract information from. From the big data, time and location information is extracted. This time and location information is interpreted via the execution of an algorithm to find correlations and recognize location patterns over time. Thereby, insight is gained in the behavior of the user. Particularly, the locations which are regularly visited by a user can be recognized, and the time of visit can be obtained. From this information, a location pattern over time can be recognized. For example, when a user has a nine-to-five job during weekdays, the information will show that during weekdays, the user is often at a working location. Outside the working hours or in weekends, the user activity data shows that the user is not at the working location. Thereby, a location pattern can be recognized over time, where a user is at a working location between nine and five o'clock on a midweek day. This location pattern can be converted to the present and future, thereby obtaining time-location expectations. Based on the extracted time and location information, which is extracted from past user activity data, present and future user locations can usually be predicted. In the given example, it can be reasonably expected that a user is at the working location between nine and five o'clock on a midweek day. Based on this knowledge, the electronic device can be configured. Thereby, configuration can be based on the expectation of proximity of the user, or expected moment of arrival or moment of leaving the location. Thereby, for example, an electronic device can be performance optimized when the user is expected to be in a close proximity of the electronic device and the electronic device can be energy optimized when the user is not expected to be in a closed proximity of the electronic device. Thereby, the invention provides in a method which uses big data in a concrete situation. The distinct data sets comprising past user activity data can comprise data that is broadcasted via twitter (often containing location information), foursquare, google plus, facebook, or other social networking applications, or that originates from telephone Call Data Records (CDR), or records of electronic payment transactions. Alternatively, the data sets comprise internet reviews where a user reviews a visit to a restaurant or hotel. In all of these data sets, past user activity data is stored where a location and a time is saved in relation to a user. Alternatively, the datasets comprise internet reviews where a user reviews a visit to a restaurant or hotel.

Preferably the algorithm uses multiple predetermined repetitively occurring time periods, said executing comprises associating said time and location information to the predetermined time period and thereby recognizing location clusters in each of the time periods. Many user activities have a repetitive character, meaning that they regularly occur during a predetermined time period. The reason is that users have obligations and habits. A working obligation requires a user to be at a prescribed workplace at a certain time. The moment of being there can vary over time but will, more often than not, show a pattern when considered over a longer period of time (for example over several months). Users can have other habits such as regularly attending a sports club, music lessons, or other cultural or social activities. An appropriate algorithm can correlate and extract repeated occurrences of time-location patterns for the multiple user datasets. The location information will be assigned to the respective time period, thereby creating compilations of location information in each time period. Particularly when the compilations show a high density (of one location) in a time period, a user habit can be determined.

Preferably the converting comprises assigning the repetitively occurring time period to the present and future and obtaining expectations based on the location cluster. A repetitively occurring time period can, because of its repetitive character, be extrapolated into the present and future. When location clusters have been recognized in certain time periods, the user can be reasonably expected to be in the respective location in the present and future as well. For example when past user activity data shows that a user is at work on a Monday between twelve o'clock and one o'clock, the user can be expected to be at work next Monday between twelve o'clock and one o'clock. In this manner, repetitively occurring time periods can be applies to the present and the future so that location clusters recognized in past user activity data provide a degree of expectation regarding future user location.

Preferably the electronic device is configurable into a first state wherein the devices is energy-optimized and into a second state wherein the device is performance-optimized. Many electronic devices, particularly electronic home devices, can be energy-optimized or performance-optimized. For example a home heating system can be performance-optimized whereby a comfort temperature is selected, or can be energy-optimized whereby a decreased temperature is selected. Another example is a WIFI-router which in a performance-optimized state regularly broadcasts with high energy to find new WIFI clients, and in a energy-optimized state sense less regularly with a low energy broadcast signals. Other examples comprise computers, televisions, and related devices, which have a switched off state and a standby state. The standby state is the performance-optimized state since a start-up from standby is very fast. However in the switched off state, the device consumes considerably less energy, and consequently this is the energy-optimized state. Based on an expectation of user location, the electronic devices can be switched to an energy optimized state, when a user is expected not to be in the proximity of the electronic device, or to a performance optimized state, when a user is expected to be in proximity of an electronic device. In this manner, the method according to the invention provides in a mechanism to dynamically adjust configuration of the electronic device based on big data, being data that is already available.

Preferably the device is located at a predetermined location and is configures into a second state when the user is expected to be close to the predetermined location. Thereby, energy consumption is optimized based on expectations regarding user location. Thereby, the electronic device is located at a certain location, the latter being compared to the expected location of the user.

Preferably, the user is registered as one of a set of main users of the electronic device. One or more users can be registered as main users of the electronic device such as a heating system of a house. When a user is registered as one of the main users of the device, and the user is expected to be close to the location of the electronic device, electronic device can be switched to performance-optimized state thereby providing a maximal comfort to the user while energy optimizing by switching the electronic device to an energy saving state when the user is expected to be away from the electronic device.

Preferably the two distinct data sets comprise log data of the user. Several applications are known which log user activity data, examples of application being twitter, facebook, foursquare, google plus, telephone call applications, electronic payment applications, ....

Preferably, the two distinct data sets originated from different applications are not related to the electronic device: in the given examples, it is clear that a home heating system is not related to the Twitter account of the user living in the home. The advantage of using distinct data sets that originate from different application not related to the electronic device is that no energy is consumed for active data collection purposes in the creation of the data sets. Namely, the data sets are created for a different purpose (for example social networking) and would be created anyway. The collection of the data and processing of the data is separate from the creation of the data, because there is no active data creation. The collection and processing can be optimized and do not need to be executed on a wireless device carried by the user.

Preferably the electronic device is located in a predetermined location and comprises a memory where information relating to this predetermined location is stored. Thereby, the location information which is stored in the memory indicating the location of the electronic device can be used as a base to configure the device. This location can be compared with the expected location of the user to determine whether the user is close to, or away from the electronic device.

The invention further relates to a steering device comprising an accessing module accessing at least two distinct data sets each comprising past user activity data, an extracting module for extracting time and location information for each of the data sets, a processing module for executing an algorithm to obtain, from the extracted time and location information, time-location correlations to recognize a location pattern over time, a converting module for converting the location pattern over time to the present and future to obtain a time-location expectation, and, a configuring module operationally connected to an electronic device to configure said electronic device based on said expectation. Thereby, a steering device and its components are provided to execute the above described method.

Preferably the configuration module is operationally connected to a plurality of electronic devices and wherein the steering device comprises a memory for storing user information relating to each of the electronic devices. With this steering device, multiple electronic devices can be configured. Thereby, the configuration function for configuring the electronic devices is implemented in an external, steering device. This allows placing a steering device in an existing situation and allows the steering device to control electronic devices.

Preferably the memory further comprises location information indicating the location of each of the electronic devices, wherein the configuration module is provided to configure the plurality of electronic devices based on the expectation and based on the proximity of adjacent electronic devices. Adjacent electronic devices can interfere with one another. For example, WIFI routers, which are provided to operate on a limited number of channels, can interfere with one another when they are configured to operate on the same channel. The steering device can configure multiple electronic devices taking into account such interference because the locations of the electronic devices are known to the steering device. Thereby, the steering device is given the "bigger picture", to thereby optimally configure a situation based on user location expectations and interference expectations.

### Brief description of the figures

Some embodiments of apparatus and/or methods in accordance with embodiments of the present invention are now described, by way of example only, and with reference to the accompanying drawings, in which:
figure 1 shows an example of an environment where the invention is applicable;
figure 2 shows an example of a sequence of steps of the invention.

### Detailed description of embodiments

In the context of this disclosure, the term location is to be interpreted more broadly than as mere 'geographical location', and also covers every indication that a user is close to, or away from a certain venue or geographical location. Therefore the information 'calling from a cell in another town' is considered location information although it does not clearly points out the geographical location of the user. It does give a relative indication of the location. Also the information 'paying a restaurant bill' is considered as location information since it implies the presence of the user at a restaurant (and thus not at home). It is in first instance not relevant whether this restaurant is identified.

In the context of the present disclosure, the term dataset is defined as a collection of individual records comprising at least one of the following, preferably all of the following: timestamps, location information, user identification information and optionally further metadata.

The present disclosure describes a method for extracting meaningful features and trends from Big Data, particularly from traces of geo-located user communications. The disclosure furthermore describes application of these features and trends by configuring an electronic device, for example commanding user-facing devices or commanding communication infrastructure elements. The problem being solved is generating predictions or expectations of a user's future behavior without actively monitoring the user's position, e.g. by using a GPS tracker or other intrusive forms of mobile sensing. In the present disclosure, a method is proposed that combines multiple communication trails (multiple datasets forming part of the big data) of one or more users and produces a list of predictions about a user's behavior as intermediate output. The list thus generated can be used in a number of scenarios to configure programmable devices for various purposes, e.g. reduction of power consumption and decreasing of radio interference.

The study of human mobility patterns has a long history. While often modeled as a purely random process, human mobility is heavily determined by environmental factors and has been shown to be indeed rather predictable. A large number of methods have been devised based on continuous monitoring of user mobility. Although accurate, these efforts require sources of location data that provide a high spatial and temporal sampling resolution, limiting the applicability of their method to applicative contexts where no constraints concerning battery life or communication cost exist. Participatory sensing approaches, such as the one described in this disclosure, rely on information that is disclosed by the users as part of their normal interaction with the system, thus eliminating the footprint of an independent continuous monitoring activity. Additionally, the privacy implications of collecting high-resolution information about a user's whereabouts could be unacceptable to users, and the very existence of these data would have negative implications, endangering civil liberties under repressive and/or corrupt administrations.

Other active localization techniques based on Wi-Fi beacon fingerprinting, GSM/UMTS antenna beam triangulation, etc., all suffer from similar drawbacks (about cost / energy and privacy) as explained above. In contrast, the present invention covers a set of passive methods that act on combined sources of opportunistically collected data (e.g. from locality-based social networks, GPS-tagged messaging activity, cellular call records, micro- and pico-cell logs) and as such they do not incur in any significant data collection overhead nor additional privacy risk. Despite the high irregularity in the temporal sampling of users' mobility patterns, opportunistically collected communication traces comprise quite well the regular features of a user's daily routine that matter for the use of the infrastructure itself. For users with as little as few hundreds of events recorded over the course of a year, tests have shown that is is possible to recognize and identify significant locations and activity that emerge from the user's combined communication history.

The problem relating to cellular radio interference is explained hereunder. The demand for larger bandwidth from mobile radio access network is steadily growing due to the rising popularity of Internet-enabled mobile devices and their multimedia applications. The radio access part is increasingly considered as the bottleneck of the achievable data rate for the mobile terminals because wireless connectivity is less reliable and more error-prone than fixed access.

The throughput of wireless communication system is limited by several factors, such as the radio propagation conditions, the quality of network planning, and the physical layer transmission techniques employed. The conventional radio resource planning for cellular networks is both static and passive. "Static" refers to the fact that the cellular network infrastructure is fixed after planning the deployment of base stations at the edge and of the core processing equipment at the central and regional offices. "Passive" refers to the fact that each base station allocates radio channel resources for mobile devices only once they are localized in the coverage range of the base station and engaged in active communication. Base station location planning is an optimization problem: minimize the number of deployed base stations and maximize the radio coverage range under a reasonable radio quality, which determines achievable throughput.

At each base station, the transmitting and receiving power can be adjusted according to the channel quality and interference situation. In UMTS system, uplink power control consists of open and closed loop components and controls. Open loop power control is used for user equipment (UE) to set its output power to a specific value. Closed loop power control is used by UE transmitter to adjust its power according to the transmit power control commands received from the downlink. The similar strategy is also adopted in the LTE system. Moreover in the LTE system, the sub-frequency bands are orthogonal - hence different users are assigned to different sub-frequency bands to avoid intra-cell interference. Inter-cell interference among adjacent cells can be avoided by detecting potential interfering sources and an overload indicator is exchanged over the X2 interface among base stations for inter-cell power control.

To cope with the fast growth of wireless access bandwidth, mobile operators are transitioning towards the next generation radio access networks and are considering multi-tier cell deployments to supplement their macro-cell infrastructure. According to the coverage range, cellular networks can be defined in three categories: macrocells (< 3 km), micro-cells (< 1 km) and pico-cells (< 100 m). Pico-cells were introduced to support end-users within a limited range, typically in an indoor environment, in order to both extend coverage to zones not reached by a sufficient macro-cell service, and to offload mobile traffic from core networks by exploiting a fixed broadband Internet access as their uplink. The multi-tier coexistence among macro/micro and pico cells is a feasible and promising deployment model for future mobile access infrastructure but it also presents some drawbacks, for instance, co-channel interference coordination.

An example of the invention provides a method that exploits out-of-band sources of user-generated information to affect the configuration of base stations (especially - but not limited to - micro and pico cells) by guiding the choice among a set of pre-determined power and frequency allocation profiles in order to limit the amount of radio resources allocated to the expected needs of the target user population. This method can coexist with the established forms of transmission power control based on feedback outlined above.

The invention furthermore discloses a family of methods for collecting and processing geo-located communication traces, which associate time information and location information of a communication event driven a user's communication activity, and exploiting them for dynamically configuring programmable electronic devices that are owned, managed or otherwise chiefly employed by the users.

Such communication traces include, but are not limited to: geo-tagged social network messages (e.g. Twitter), location-based social check-in information (e.g. Foursquare), cellular phone activity traces that include cell / micro-cell identifiers, wi-fi association /authentication trail with a set of access points, debit card / credit card / electronic currency payment records that include geographical venue information.

Target configurable electronic devices include, but are not limited to: GSM - UMTS - LTE cells and micro-cell access devices (ref: ALU base-station router patents), IEEE 802.11 (wi-fi or other wireless technology) access points, home appliances and devices (such as: space heaters, A/C system, on-demand video players, power meters for smart grids).

Configuration actions include, but are not limited to: turning on and off the main function of the device in order to save power, modify the transmission power and allocated frequency spectrum to improve overall frequency reuse and reduce interference, pre-fetch and store large amounts of data at off-peak times intended for delayed consumption, trigger a specified action when a condition is met based on the processed trace data.

An aspect of the invention is the use of information which is generated by the ordinary communication activity of a user, which renders the method we propose passive and, as such, applicable to contexts where active sensing and collection of user-related data are not possible due to constraints about (among others): privacy reasons, limited power consumption (e.g. to preserve battery life), spotty connectivity, lack of access rights to user devices. In the invention, big data is used to extract expectations regarding user location in the present and future.

Another aspect of the invention is the ability to leverage the combination of multiple different sources of communication trails: from traditional sources (such as cellular communication systems) to new sources of user-generated data (such as locality-based social networks and micro-blogging). The technique proposed can be extended by combining the passive sources of data with active locality tracking techniques found in the literature (such as wi-fi fingerprinting or cellular antenna triangulation) as additional sources of data, in contexts where these become available.

A third aspect is the ability of the method to run - thanks to the passive nature of the generation of the communication data trails - either a) on a programmable device whose configuration will be computed based on the predictions locally elaborated from the collected data, or b) on hardware hosted in any other location (such as Cloud computing platforms or network operator's managed hardware pools) where the sources of communication data trails can be accessed. The first scenario is suitable for preserving privacy, e.g. by never releasing the locally collected communication trail of a user to other parties, while the second is suitable where the communication trails cannot be made public, e.g. due to the proprietary nature of the trails or national security reasons.

The system is composed of the following four logical subsystems:
- Data Gatherer(s) (DG) - obtains and parses the user's communication trace(s)
- Data Processor (DP) - aggregates and processes the parsed trace(s) to create a schematic model of user activity
- Rule Engine (RE) - defines the bindings between expected user state and desired action to be performed
- Device Controller (DC) - configures the device's functionality based on user activity model and set of rules

The logical subsystems can be deployed in a number of practical configurations, which we refer to as Scenarios. In a local embodiment scenario, a device locally performs the three logical steps of the method of the invention. Two following cases illustrate this scenario:
- Power management of wi-fi base station based on communication traces
- Spectrum management of small cells based on communication traces

In a cloud embodiment scenario, a device receives a pre-computed model of user activity that is generated by a service provider based on communication traces that may not be directly accessible to the user. Two following cases illustrate this scenario:
- Pre-fetching of movies for deferred viewing based on communication traces
- Frequency allocation planning in a cellular network with micro/macro cells based on multiple user communication traces

The Data Gatherer DG components take as input a trace of localized user communication activity or location-based social network check-ins and extracts from it a series of events. The DG functionality may be localized at the device itself or on another networked machine, operating on local data (e.g. device log files), remote data (e.g. traces collected by a crawler), or both.

The Data Processor DP processes event series from DG(s) and extracts their stable and recurrent features with appropriate algorithms (k-means clustering, DBSCAN, etc.). The output of the DP is a list of predictions that constitutes a model for user activity associating locations / activities with time ranges. The DP functionality may be localized at the device itself or on another networked machine.

The Rule Engine RE associates locations or activities appearing in a prediction with prescribed actions that one or more devices need to implement in a given time range. The RE functionality may be localized at the device itself or on another networked machine.

The Device Controller DC implements the rules from the RE based on the user model generated by the DP. It is always hosted on the device itself.

Combined use of communication traces of various origins, as detailed above, is an unobtrusive passive method for user data collection that does not require continuous active monitoring of a user's position. The expected user position can be modeled based on a sufficiently long and/or dense record of previous geo-located user communication events, without a requirement for access or installation rights on the user's mobile communication device. Communication events, collected from assorted sources, can reveal recurrent patterns in a user's daily schedule that can then be leveraged as triggers of appropriate actions by software running on devices, e.g. home appliances and communication infrastructure.

The advantages of the method and device according to the invention include:
- Lack of negative impacts on the battery life of the mobile devices that generate the sensor data about the user
- Control of the degree of disclosure of sensed data used to produce the predictions about future user location
- Providing a flexible user-driven way to configure devices without explicit user intervention: the use cases presented above show examples where the method is used to control power consumption and improve the transmission rate of wireless networks, by toggling power-saving modes and by reducing the transmission power of unused cells and access points that would cause needless interference.

A user routine can be defined as the repeated occurrence of user actions that share a common feature and happen at the same approximate time of day on a significant number of days.

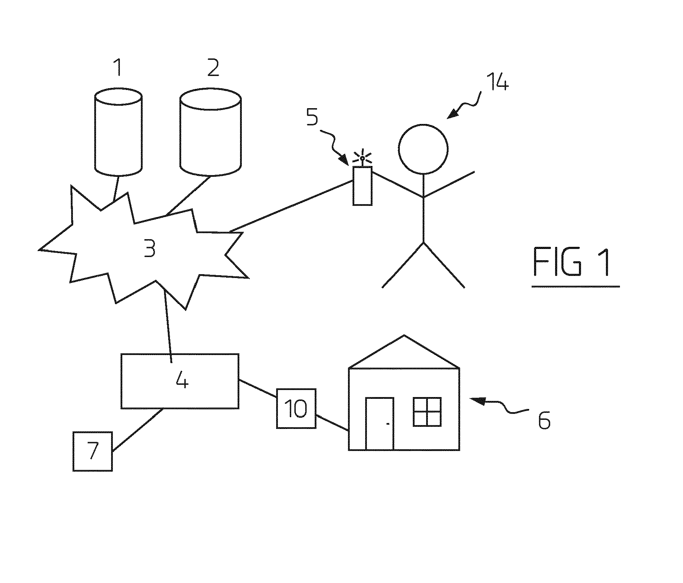

Figure 1 shows a principle scheme of a situation where the invention is applicable. The figure shows a user 14 which, via a mobile phone 5, is connected to the internet 3. Thereby, the user 14 broadcasts messages comprising time information and location information. These messages are stored in databases 1 and 2 forming datasets comprising past user activity data. Examples of such messages are given above. Thereby, the datasets are distinct as they originate from different applications. The datasets thereby implement the functionality of the above-described data gatherer DG.

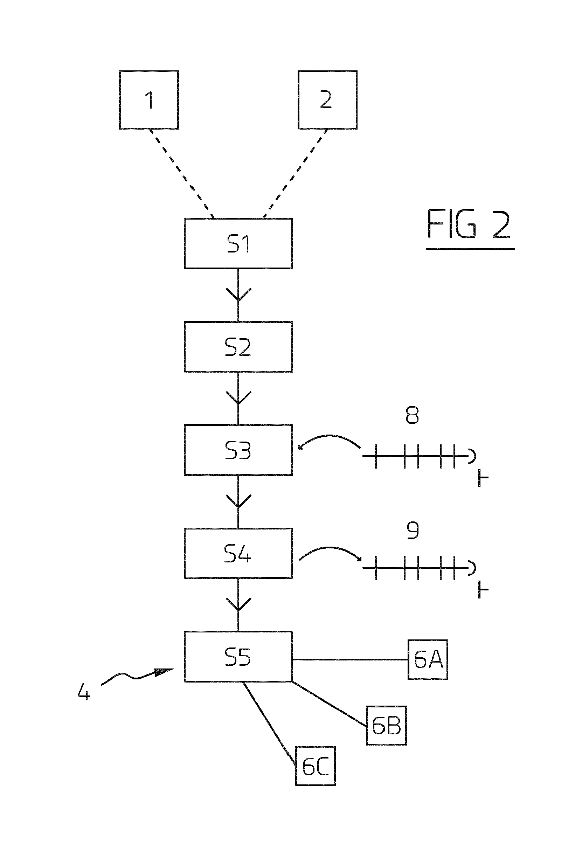

These datasets 1 and 2 can be accessed by a data processor 4. The data processor 4 extracts time and location information from the datasets 1 and 2, via an internet 3 connection, and executes an algorithm to obtain a location pattern over time, and converts the location pattern to the present and future to thereby obtain a time-location expectation. Thereby, the data processor 4 implements the functionality of the above-described data processor DP. The physical location of the data processor 4 can vary from in the electronic device to in a dedicated device (a steering device) that is operationally connected to the electronic device to a cloud computer where the functionality is spread over different physical locations. The functions executed by the data processor 4 will be further explained hereunder with reference to figure 2.

The figure 1 further shows a rule engine RE 7, which is operationally connected to the steering device 4. The rule engine 7 comprises the logical rules for configuring the electronic device in relation to the time-location expectation of the user. For example, the rule engine will comprise a 'switch to non-active mode' in relation with a 'user is away' expectation. This example is a simple logical rule, however more complex rules can be comprised by the rule engine 7 for example for configuring multiple wireless devices in a building, based on user expectations and to avoid interference. The rule engine can physically be integrated in the electronic device or in the steering device or in a cloud computer.

The figure further shows a device controller 10 which is provided to configure the one or multiple electronic devices based on the location expectations of users and based on the set of rules comprised by the rule engine. The device controller can physically be integrated in the electronic device or in the steering device or in a cloud computer.

The electronic device is preferably a stationary device, illustrated by the house 6 in figure 1, meaning that the electronic device is non-moving and has a predetermined location. Preferably the predetermined location is saved in a memory of the rule engine or the steering device so that the location expectation of the user can be compared to the predetermined location of the electronic device to decide whether the user is expected to be in a close proximity of the electronic device. Examples of electronic devices are given above and comprise further heating systems, wireless devices, backup systems and other.

Preferably, the data processor 4, the rule engine 7 and the device controller 10 are integrated into a steering device which is operationally connected to the one or more electronic devices. Thereby, the steering device is adapted to control the electronic devices based on the location expectation of the user.

Figure 2 shows the steps of the method according to the invention. The figure shows the datasets 1 and 2, which in a first step S1 are accessed to thereby have past user activity data from two distinct datasets.

In a next step S2, time and location information is extracted from the accessed datasets.

In a next step S3, an algorithm is executed to obtain, from the extracted information, time-location correlations to recognize location patterns over time. These location patterns thereby represent user habits. In this step, the algorithm preferably uses a repetitively occurring time periods 8. An example of such repetitively occurring time periods 8 is 'week day 09h - 12h'. The algorithm is provided to organize the locations in the matching time periods 8. As a result, location clusters will arise in a time period 8 when the user is often at that location during that period. In the given example, a location cluster might be visible showing that the user is at 'work location' on a week day between 9h and 12h. From this cluster, a pattern can be recognized.

In a next step S4, the location pattern recognized in step S3 is converted to the present and future to obtain a time-location expectation. Time-location expectation is defined as an expectation of a user being at a location on a certain moment of time (or during a certain time period). Such conversion can be obtained by assigning the repetitive time periods onto a present and future timeline 9. Thereby, when a location cluster is recognized in step S3 in a time period, a user is expected to be at that location in the present and future corresponding time period as well. Thereby, based on the conversion of step S4, location expectations of a user can be obtained.

In step S5, the electronic device or electronic devices 6A, 6B and 6C are configured based on the location expectation of the user obtained in step S4. This step S5 is preferably based on a set of rules defining electronic device configuration states in relation to different location expectations of a user. Such set of rules can be used as a lookup table where the state is retrieved for a corresponding location expectation of a user. Examples of states of the electronic device are given above and further comprise energy-optimized and performance-optimized states. An example of a rule is that if a user is expected to be close to the electronic device, the device is configured into the performance-optimized state. Thereby, preferably a user is registered as main user, or one of multiple main users, of the electronic device. Such registration can be saved in a memory of the electronic device or of the steering device.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for configuring an electronic device, the method comprising the steps of:
- Accessing at least two distinct datasets each comprising past user activity data;
- Extracting time and location information from each of the datasets;
- Executing an algorithm to obtain, from the extracted time and location information, time-location correlations to recognize a location pattern over time;
- Converting said location pattern over time to the present and future to obtain a time-location expectation; and
- Configuring the electronic device based on said expectation.

2. Method according to claim 1, wherein said algorithm uses multiple predetermined repetively occuring time periods, said executing comprising associating said time and location information to the predetermined time periods and thereby recognizing location clusters in each of the time periods.

3. Method according to claim 2, wherein said converting comprises assigning said repetively occuring time periods to the present and future, and obtaining expectations based on the location clusters.

4. Method according to any one of the previous claims, wherein said electronic device is configurable into a first state wherein the device is energy-optimized and into a second state wherein the device is performance-optimized.

5. Method according to claim 4, wherein the device is located at a predetermined location and is configured into the second state when the user is expected to be close to said predetermined location.

6. Method according to any one of the previous claims, wherein the user is registered as one of a set of main users of said electronic device.

7. Method according to claim 6, wherein said two distinct datasets comprise log data of said user.

8. Method according to claim 7, wherein said two distinct datasets originate from different applications not related to the electronic device.

9. Method according to any one of the previous claims, wherein said electronic device is located in a predetermined location and comprises a memory wherein information relating to this predetermined location is stored.

10. Steering device comprising an accessing module for accessing at least two distinct datasets each comprising past user activity data, an extracting module for extracting time and location information from each of the datasets, a processing module for executing an algorithm to obtain, from the extracted time and location information, time-location correlations to recognize a location pattern over time, a converting module for converting the location pattern over time to the present and future to obtain a time-location expectation, and, a configuring module operationally connected to an electronic device for configuring said electronic device based on said expectation.

11. Steering device according to claim 10, wherein the configuring module is operationally connected to a plurality of electronic devices, and wherein the steering device comprises a memory for storing user information relating to each of the electronic devices.

12. Steering device according to claim 11, wherein said memory further comprises location information indicating the location of each of the electronic devices, wherein the configuration module is provided to configure the plurality of electronic devices based on said expectation and based on a proximity of adjacent electronic devices.
